# EUROPEAN PATENT SPECIFICATION

(11) **EP 3 226 659 B1**
(45) Date of publication and mention of the grant of the patent: **13.10.2021**
(21) Application number: 16163495.1
(22) Date of filing: 01.04.2016
(51) Int. Cl.: H05B 47/185, H05B 47/18, H05B 47/19, H04L 12/28

(54) **LOCATION AND USER SPECIFIC CONTROL OF LIGHTING**
STANDORT- UND BENUTZERSPEZIFISCHE STEUERUNG VON BELEUCHTUNG
COMMANDE D'ÉCLAIRAGE SPÉCIFIQUE D'UTILISATEUR ET DE LOCALISATION

(43) Date of publication of application: 04.10.2017
(73) Proprietor: Helvar Oy Ab, 02150 Espoo (FI)
(72) Inventor: Juslén, Henri, 02150 Espoo (FI); Brax, Matti, 02150 Espoo (FI); Hakkarainen, Petri, 02150 Espoo (FI)
(74) Representative: Papula Oy

(56) References cited:
- WO-A2-2008/104927
- US-A1- 2016 069 585
- US-B1- 8 941 307

## Description

### FIELD OF THE INVENTION

The invention relates to the control of light sources. In particular, the invention relates to an apparatus, a method, and a computer program for controlling the operation of a location-specific light source according to user-specific preferences.

### BACKGROUND OF THE INVENTION

The concept of personalized lighting means selecting the values of lighting parameters, such as intensity, colour, colour temperature, direction, relative amount of direct and indirect light etc., as well as the settings of dynamic lighting control, such as circadian rhythm or other desired variations, according to user-specific preferences. For example, a first user might want his or her nearest environment to be illuminated with bright, cool-white light in the morning and with softer, more warm-toned light in the afternoon, while a second user might prefer an exactly opposite arrangement. Automatic control is preferable, so that once the personalized settings have been programmed to the lighting control system, the selected lighting pattern recurs each day without requiring any further action from the user. This is relatively easy to arrange in a working environment in which each user has an essentially fixed location, like a dedicated room, because the lighting control system may be programmed to control the lights of that location in the desired way each day. Personalized lighting becomes more challenging in an open-plan office where the selection of working places is free, so that each employee can select a desk differently each day, and even change his or her location and/or preferences during the day. The same applies to meetings rooms and corresponding shared spaces that are used in turn by a number of users. Somehow the lighting control system should be kept up to date about both the stored personal lighting preferences and the current location of each user, so that the individually selected lighting conditions could follow each user in an effortless and easily managed way.

Most known suggestions for implementing personalized lighting rely upon storing the user-specific information or at least a user identifier in the memory of a smartphone or other user-specific electronic device that the users are expected to constantly carry on their person. For example the prior art publication EP 2 925 098 suggests placing a short-range wireless transceiver (in particular, a Bluetooth Low Energy (BLE) module) in (or close to) the pedestal of each luminaire and in the smartphone of the user. Each luminaire is also equipped with a presence detector. When the luminaire detects a user within its service area, it uses the BLE module to read the user-specific values of lighting control parameters from the memory of the smartphone. If there are multiple smartphones within the communications range of the BLE module, it selects the one with the highest RSSI (Received Signal Strength Indicator).

All personalized lighting solutions in which the identification of the user is based on recognizing the closest smartphone or other wirelessly communicating device suffer from drawbacks related to the unpredictable nature of both user behaviour and propagating conditions of the radio or other wireless signal. For example in the system described in EP 2 925 098 it may happen that the user actually sitting at the desk in question has his or her smartphone on the far end of the desktop, while another user sitting at the adjacent desk placed his or her smartphone in a bag that lies on the floor behind him or her, almost next to the BLE module that should pick up the signal from the smartphone of the first-mentioned user. Another scenario could involve four desks in a four-leaf clover formation, each having a downlight- or pendant-type luminaire of its own that tries to detect the smartphone of particularly that user who sits directly below. If all other users have their smartphones in their bags or trouser pockets, and one user is speaking to his or her phone and stands up, it is very likely that all luminaires will detect the signal of the standing user as the strongest at least temporarily, which may lead to unwanted and irritating changes in the lighting conditions of the nearby desks.

Another approach to personalized lighting relies upon the user-specific controlling device recognizing the luminaires and not the other way round. A prior art publication WO 2014/033571 suggests that each luminaire modulates its emitted light with its ID code at a high frequency. The modulation goes unnoticed by a human user, but a suitably programmed, camera-equipped user-specific device such as a smartphone or laptop can recognize each luminaire it sees. After recognizing the luminaire(s) the device may use a further wireless communications link to a lighting controller to send lighting commands. This solution naturally works only if the user places his or her device so that its camera can see all luminaires that are to be controlled. Additionally it requires all luminaires to be capable of using an ID code to modulate the emitted light, and may necessitate some kind of coordination between luminaire and smartphone manufacturers to ensure that the devices are compatible with each other for example in terms of modulation frequency and other characteristics of the light signal.

A prior art document US 2016/0069585 A1 discloses a control device for controlling the environment in a region within a structure by means of controlling operation of a control system, which is adapted to adjust at least one property of the environment in the region. At least one property of the environment in the region is adjustable at least based on presence information of any persons being present in the region. The extend of control of the environment is based at least partly on the presence information.

Another prior art document WO2008/104927 A2 discloses a computer-controlled lighting system which comprises an interface for defining a work surface within the lighting system and a desired illumination of the work surface, at least one luminaire for illuminating the work surface and a processing unit for automatically computing configuration parameters based on the desired illumination and based on position information of the at least one luminaire, which configuration parameters allow configuring the at least one luminaire such that the desired illumination of the work surface is achievable.

### SUMMARY OF THE INVENTION

It is an object of the present invention to provide an approach for controlling operation of one or more light sources on basis of user-specific input control signals with high certainty of only following the correct controlling device. Another object of the present invention is to enable more versatile approach for controlling operation of one or more light sources that does not introduce a significant change to the existing approach employed for controlling one or more light sources with input control signals that come from a switch.

The objects of the invention are reached by an apparatus, a method, and a computer program as defined by the respective independent claims.

According to a first aspect of the invention, there is provided an apparatus for generating control information for controlling one or more luminaires of a lighting system. The apparatus comprises a memory configured to store a piece of location-specific information, a receiver configured to receive a piece of user-specific information, a message composer configured to combine said pieces of location-specific and user-specific information into a message containing control information for at least one of said luminaires, and a transmitter configured to transmit said message in the purpose of con-trolling said at least one of said luminaires. Said apparatus is a piece of location-specific equipment for use at a particular location within an area that is served by said lighting system and that contains a number of specific locations that are to be illuminated according to personal preferences of users. Said receiver comprises a discriminator configured to allow receiving said piece of user-specific information when a local connection is established between said apparatus and the originator of said user-specific information.

According to a second aspect of the invention, there is provided a method for generating control information for controlling one or more luminaires of a lighting system. The method comprises storing a piece of location-specific information, receiving a piece of user-specific information, combining said pieces of location-specific and user-specific information into a message containing control information for at least one of said luminaires, and transmitting said message in the purpose of controlling said at least one of said luminaires. Said location-specific information is stored in a piece of location-specific equipment that is used at a particular location within an area that is served by said lighting system and contains a number of specific locations that are to be illuminated according to personal preferences of users. Said step of receiving a piece of user-specific information is per-formed when a local connection is established between said piece of location-specific equipment and a user-specific device that is the originator of said user-specific information.

According to a third aspect of the invention there is provided a computer program comprising machine-readable instructions that, when executed by one or more processors, are configured to cause the implementation of a method of the kind described above.

The computer program may be embodied on a volatile or a non-volatile computer-readable record medium, for example as a computer program product comprising at least one computer readable non-transitory medium having program code stored thereon, the program code, which when executed by an apparatus, causes the apparatus at least to perform the operations described application as an open limitation that does not exclude the existence of also unrecited features. The features described hereinafter are mutually freely combinable unless explicitly stated otherwise.

The novel features which are considered as characteristic of the invention are set forth in particular in the appended claims. The invention itself, however, both as to its construction and its method of operation, together with additional objects and advantages thereof, will be best understood from the following detailed description of specific embodiments when read in connection with the accompanying drawings. hereinbefore for the computer program in accordance with the third aspect of the invention.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

The novel features which are considered as characteristic of the invention are set forth in particular in the appended claims. The invention itself, however, both as to its construction and its method of operation, together with additional objects and advantages thereof, will be best understood from the following detailed description of specific embodiments when read in connection with the accompanying drawings.

### BRIEF DESCRIPTION OF THE DRAWINGS

Figure 1 illustrates the principle of combining a piece of location-specific and user-specific information into a lighting control message upon establishing a connection between a piece of location-specific equipment and a user-specific device.
Figure 2 illustrates an example of a piece of location-specific equipment.
Figure 3 illustrates a location within an area served by a lighting system and examples of location-specific equipment and a user-specific device.
Figure 4 illustrates an example of a docking station that can be used as a piece of location-specific equipment.
Figure 5 illustrates an example of a docking station and dongle that can be used as a piece of location-specific equipment.
Figure 6 illustrates a method according to an embodiment of the invention.
Figure 7 illustrates a method according to another embodiment of the invention.
Figure 8 illustrates a location within an area served by a lighting system and examples of location-specific equipment and a user-specific device.
Figure 9 illustrates a method according to another embodiment of the invention.
Figure 10 illustrates a variation of the method of the preceding drawing.
Figure 11 illustrates a location within an area served by a lighting system and examples of location-specific equipment and a user-specific device.
Figure 12 illustrates a method according to another embodiment of the invention.
Figure 13 illustrates a location within an area served by a lighting system and examples of location-specific equipment and a user-specific device.

### DETAILED DESCRIPTION

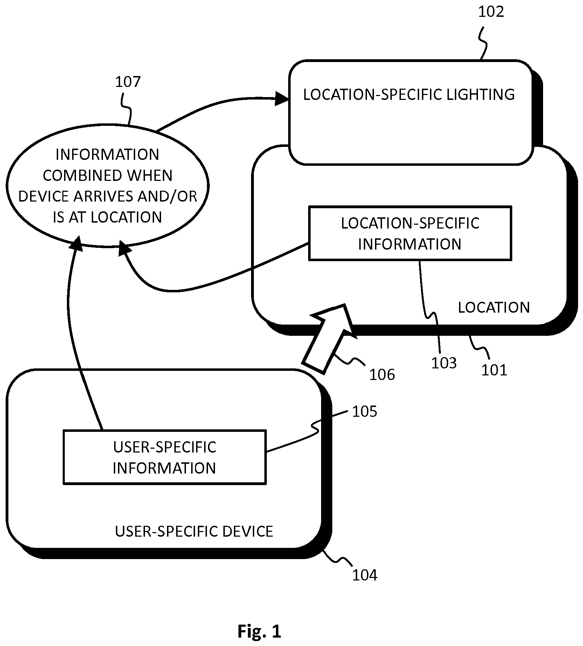

Fig. 1 illustrates the concepts of location-specific information and user-specific information and their combination. The location illustrated schematically as 101 is a particular location within an area that is served by a lighting system. As an example, it may be a table or desk within an office space. Typically said area contains a number of specific locations that are to be illuminated according to personal preferences of users, for which purpose there are one or more luminaires or other location-specific lighting means 102. Again as an example the location-specific lighting means 102 may comprise a luminaire hanging (or otherwise supported) above or close to the table or desk, so that the office space contains a number of such table-luminaire-pairs. There may be two or more luminaires, each of which belong at least partly to the location-specific lighting means 102, and a particular luminaire may have roles in illuminating two or more locations. Some luminaires may have spatially controllable emission patterns, in which case the location-specific lighting means 102 may mean that part of the available emission pattern that can be directed towards that particular location. Illumination according to personal preferences of users means for example that the user working at the table or desk can tune the lighting level and colour temperature of the location-specific lighting means 102 so that they match his or her concept of optimal lighting.

A piece of location-specific equipment exists at said location. A table or desk was mentioned above, and indeed a table or desk is one example of location-specific equipment. In offices that employ at least partly wired communications the employees are often expected to couple a portable computer to a local connection point of a computer network when they arrive at a particular desk. For that purpose a docking system is provided, which may comprise a docking station and one or more connection cables. The docking station may contain an integrated power supply for delivering operating power to the portable computer, or the docking system may be augmented with an external power supply. The docking station, the connection cable(s) and the power supply are examples of location-specific equipment, because at least some of them typically reside more permanently at a particular location than the portable computers of users, which are carried around all the time. Further examples of possible location-specific equipment are a display, a keyboard, a mouse, and other user interface devices that are so heavy and/or large and/or otherwise inconvenient to carry around that they are preferably provided at each location separately, in many cases (semi-)permanently coupled to the docking station.

Although a wired connection is considered the most reliable alternative and the one guaranteeing the fastest and least error-prone communications channel, the docking station may use a short-distance wireless connection with the user's portable computer or other portable electronic equipment, for example so that coupling a portable computer to the docking station means just placing the portable computer at a particular location on a table. In the absence of a complete docking system the piece of location-specific equipment may involve simply a receptacle for a network cable, and/or the network cable itself.

Within said piece of location-specific equipment resides a memory configured to store a piece of location-specific information 103. Said memory may be integral to a docking station or to some other part of the docking system, but it may also reside within an independent mechanical entity, for example within a dongle with a connector for connecting to a receptacle in the docking station or in a user-specific device. If the piece of location-specific equipment is a table, desk, or other piece of furniture, the memory may be embedded in its structure. For the purposes of the present invention it is most advantageous if the memory is within a device or a piece of equipment that by nature remains at a relatively stable location within the area served by the lighting system.

The role of the location-specific information 103 is to enable correctly recognizing the location-specific lighting means 102 that serve that particular location. Examples of such location-specific information 103 include but are not limited to
- identifier(s) of that luminaire or those luminaires, the light of which has a role in illuminating that location,
- identifier(s) of a logical location, like the identifier of a table in a systematic identification scheme of an array of desks,
- identifier(s) of a physical location, like a set of coordinate values in a global or local coordinate system.

The location-specific information 103 may include also information about the particular properties of that location with respect to sunlight or other externally provided lighting. As an example, the location-specific information 103 may tell that this particular location is located very close to a window facing a particular compass direction, which indicates that the lighting experienced by users at this particular location depends heavily on both the weather and the time of the day: a desk in front of a westward window will receive lots of sunlight in the late afternoon of a sunny day, while a corresponding desk near an eastward window receives sunlight only in the morning (taken that the day is sunny). Externally provided lighting may be also other than naturally occurring light: if the location is close to a glass wall, with the corridor lights or the luminaires of some other, separately controlled lighting system on the other side of the wall, the lighting conditions may depend heavily upon the way in which said other lighting system operates.

Another part that is schematically shown in fig. 1 is a user-specific device 104. In the present context, in particular such a user-specific device is meant for which there is a dedicated way of connecting to the location-specific equipment. Again as an example, if the location-specific equipment is (or includes) a docking station, the user-specific device 104 may be a portable computer, laptop computer, tablet computer or the like that is meant to be docked to the docking station. If the location-specific equipment is a mere receptacle for a network cable, the user-specific device 104 may be a network cable or a portable computer that is meant to use a network cable coupled to said receptacle to connect to a network. If the location-specific equipment is or involves a fixed or semi-fixed charging spot for a portable device (such as a portable computer or portable communications device) of the user, the user-specific device 104 may be that portable device the battery of which is to be charged.

A difference to prior art systems such as EP 2 925 098 is that there is a dedicated way of connecting the user-specific device to the location-specific equipment, said dedicated way involving more than just the aim of enabling personalized lighting. The dedicated way of connection may have a primary purpose that is something completely else than controlling the lighting. It is most advantageous to utilize the fact that - taken the way in which users are told to behave in that environment - the user can be expected to establish said connection irrespective of whether he or she has the purpose of controlling the lighting in a personalized way or not. For example, a user who comes to a desk equipped with a docking station can be expected to dock his or her portable computer to the docking station anyway, without even knowing that such docking could have a role in how the lighting around the desk will behave. A user who plans to work at a particular desk long enough to appreciate personalized lighting can well be expected to place his or her portable communications device to a fixed charging spot for the duration of his or her stay. A user who comes to a table that is equipped with a near-field or short-distance link for connecting a portable electronic device placed on a marked spot on the table to a network can be expected to place his or her portable electronic device on that spot.

Since making the connection between the user-specific device and the location-specific equipment is not something that the user would experience as an additional duty or burden, but merely something involved in the normal routine of coming to that location in any case, the present invention will be particularly effortless to use while simultaneously ensuring that the association with the right user-specific device with the right piece of location-specific equipment will be unambiguous.

Within (or at the disposal of) the user-specific device 104 is a memory configured to store a piece of user-specific information 105, the role of which is to enable correctly recognizing the personal lighting preferences of that user. Examples of such user-specific information include but are not limited to:
- an identifier of the user and/or the user-specific device, said identifier serving the purpose of a key through which one or more user-specific records can be found in a database,
- stored explicit instructions of personalized lighting conditions, like a preferred lighting intensity, a preferred colour temperature and the like,
- instructions of personalized lighting conditions expressed in a form that is specific to a particular lighting system, like commands and/or parameter values of a particular lighting control protocol.

The user-specific information 105 may comprise also information concerning user-specific preferences that are not directly related to lighting but indicate other preferred ways in which the user would like to utilize the location-specific equipment. As an example, the user-specific information 105 may tell, how the user would like to use the location-specific display facilities. When a user carrying a laptop comes to a desk equipped with a large display, he might prefer this display to be used as the main display and the smaller display of the laptop as the auxiliary display. When the same user comes to a meeting room equipped with a data projector, which from the viewpoint of the laptop is just another external display, the user might prefer to still use the laptop display as the main display and the data projector as the auxiliary display.

The arrow 106 illustrates schematically that a local connection is established between the location-specific equipment and the user-specific device 104, of which the latter acts as the originator of the user-specific information 105 in the next steps. As is illustrated schematically by the oval 107, the pieces of location-specific and user-specific information are combined into a message containing control information for at least one of the luminaires of the lighting system. Said message is transmitted to the at least one luminaire in the purpose of controlling said at least one luminaire so that it provides the appropriate personalized lighting conditions at the appropriate location. Depending on the form in which the location-specific information 103 and the user-specific information 105 are stored and on the way in which the communications between the devices and to the luminaire(s) are arranged, the acts of forming said message and transmitting it to the luminaire(s) may take different forms. Examples will be explained in more detail in the following paragraphs.

Since one aim of the invention is to ensure that always the correct user-specific information is combined with the correct location-specific information, and since wired connections are more unambiguous than wireless ones concerning which devices are coupled together, the local connection that is established between the location-specific equipment and the user-specific device is most advantageously a wired connection. The invention does not exclude wireless connections but strongly prefers such wireless connections in which the peer-to-peer selection between devices is based on a more unambiguous relation than e.g. just being in the same room or within a distance of a couple of metres. One example of a wireless connection that can be unambiguous enough is the connection where a wireless charger is used to recharge the battery of a portable device, when the last-mentioned is placed on the appropriate spot on the table.

For the purpose of making the personalized lighting take effect at the time when the user arrives at the particular location (or very soon thereafter), and also for the purpose of ensuring that the personalized lighting follows always the preferences of the correct user, it is advantageous to use a discriminator configured to allow receiving the piece of user-specific information 105 when the local connection is established between the location-specific equipment and the user-specific device that acts as the originator of the user-specific information. The "discriminating" function of the discriminator may thus involve at least discriminating between devices and discriminating between instances in time.

An example of discriminating between devices is only allowing the reception of user-specific information from a user-specific device that actually has been connected to the location-specific equipment in the dedicated way that is available. If the dedicated way involves connecting a portable computer to a docking station, user-specific information can only be validly received from such a connected portable computer. If the dedicated way involves placing a portable communications device onto a marked hotspot on a table or desk, only an appropriately placed portable communications device is allowed to act as the originator of the user-specific information. This way it is ensured that for example an accidental passer-by or the person working at the adjacent table or desk does not cause erratic changes in the personalized lighting simply because a wireless signal received from his or her portable device was received at better strength than that from the appropriate user. Yet another example of discriminating between devices is only allowing the reception of user-specific information from a user-specific device that is capable of giving a proper identification code or other proof of its authorization to take part in personalizing the lighting.

An example of discriminating between instances in time is only allowing the reception of user-specific information within a particular time window after the dedicated connection of the user-specific device was found to take place. Another example of discriminating between instances in time is explicitly requiring a user-specific device from which the user-specific information was already received to retransmit the user-specific information at certain intervals. Yet another example of discriminating between instances in time is accepting a new piece of user-specific information from the user-specific device during a previously initiated connection session if the new piece contains at least partly different user-specific information than previously, indicating that the user has made some change in his or her lighting preferences. Discriminating between instances in time is not essential, but it may help to keep the amount of data traffic within reasonable limits. It may also help to ensure that personalized lighting is only maintained at that location for the time when the person whose preferences the personalized lighting should match is actually present.

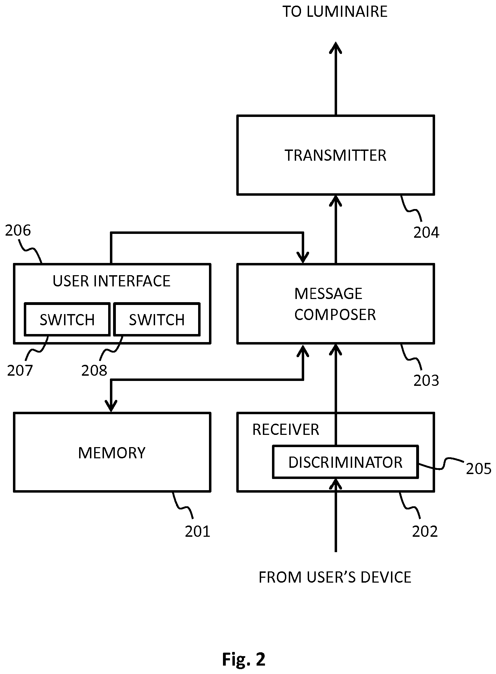

Fig. 2 illustrates a block diagram of an apparatus for generating control information for controlling luminaires of a lighting system. The apparatus is a piece of location-specific equipment for use at a particular location within an area that is served by said lighting system and that contains a number of specific locations that are to be illuminated according to personal preferences of users. In order to implement personalized lighting to a meaningful extent it is reasonable to assume that at least a certain portion of said number of specific locations are each equipped with an apparatus like that in fig. 2, so that depending on which location the user chooses, he or she will always have the location-specific equipment of that location at his or her disposal. However, since the invention involves the assumption that the connection between the user-specific device and the location-specific equipment is one that the user would make irrespective of whether the immediate purpose was to control the lighting, the apparatus of fig. 2 is not part of the actual luminaire or its dedicated control device. Thus in the conceptual illustration of fig. 1 the contents of fig. 2 would belong to the conceptual parts marked with reference designators 101, 103, and 107, but not reference designator 102.

The apparatus of fig. 2 comprises a memory 201 configured to store a piece of location-specific information and a receiver 202 configured to receive a piece of user-specific information from a user's device. It comprises also a message composer 203 configured to combine said pieces of location-specific and user-specific information into a message containing control information for at least one of said luminaires. Further it comprises a transmitter 204 configured to transmit said message in the purpose of controlling said at least one of said luminaires. The receiver 202 comprises a discriminator 205 configured to allow receiving said piece of user-specific information when a local connection is established between the apparatus shown in fig. 2 and the user's device that acts as the originator of said user-specific information.

Optionally the apparatus may comprise a user interface 206 for example in the form of one or more user-operable switches 207, 208 for receiving switch commands. In such a case the message composer 203 may be configured to combine at least one received switch command and said piece of location-specific information into a message containing control information for said at least one luminaire.

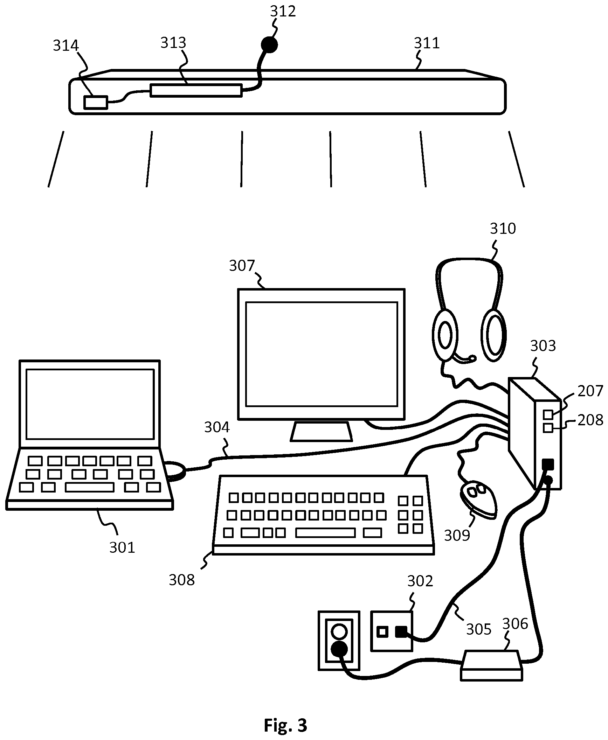

Fig. 3 illustrates one example of applying the principles shown in figs. 1 and 2 in practice. Fig. 3 shows a schematic illustration of certain devices at a particular location within an office; the office thus constitutes the area that is served by a lighting system. The location-specific equipment that is relatively permanently stationed at that particular location comprises at least a docking system for coupling a portable computer 301 to a local connection point 302 of a computer network. The local connection point 302 is a network socket. The docking system comprises a docking station 303, a first connection cable 304 for connecting the portable computer 301 to the docking station 303, and a second connection cable 305 for connecting the docking station to the local connection point 302. No separate first connection cable would be needed, if the docking station 303 was of the type that accepts the portable computer 301 into a direct electro-mechanical contact. Other exemplary parts of location-specific equipment that are shown in fig. 3 are an external power supply 306, a display 307, a keyboard 308, a mouse 309, and a headset 310 that represents an example of other user interface devices.

Also shown in fig. 3 is a luminaire 311, which illuminates that particular location where the illustrated location-specific equipment is. The luminaire 311 has a power connection 312 from which a ballast or driver 313 of the luminaire 311 draws power, and a receiver 314 for wirelessly receiving control commands and for conveying them to the ballast or driver 313.

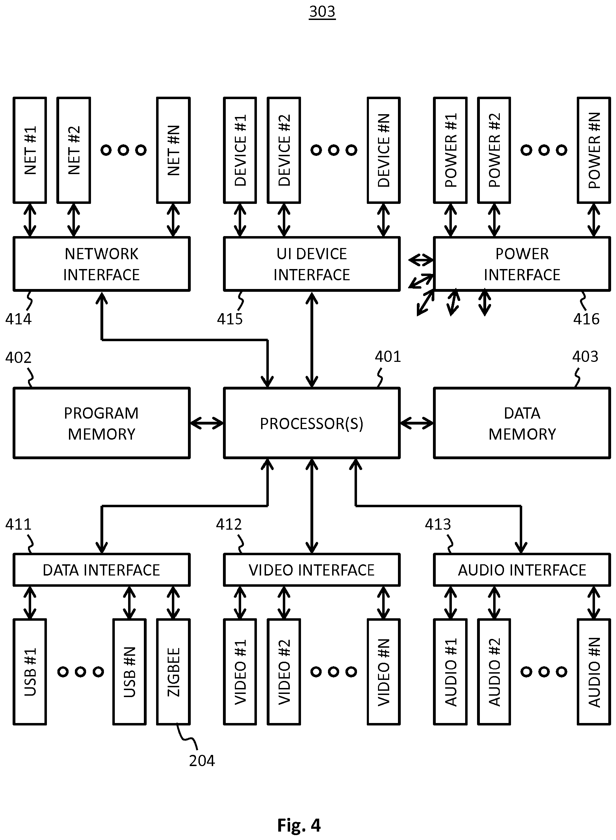

According to a first embodiment of the invention, the apparatus for generating control information for controlling the luminaire 311 is essentially the docking station 303. Its structure and operation are explained in more detail with reference to fig. 4. The docking station 303 comprises one or more processors 401, with a program memory 402 and a data memory 403 at its disposal. The program memory 402 comprises non-volatile memory such as PROM, EPROM, or EEPROM and is used to store one or more machine-readable instructions or sets of instructions that, when executed by the one or more processors 401, cause the implementation of a method that contains steps that have been and/or will be explained in this text. The data memory 403 may comprise volatile and/or non-volatile parts of memory and is used to store parameter values and other data that are useful in the operation of the apparatus. For example, the location-specific information that has been mentioned earlier is typically stored in the data memory 403. The data memory 403 represents also the run-time working memory of the one or more processors 401.

The docking station has a local data interface portion 411. It is essentially a communications interface between the one or more processors 401 and one or more standardized communication connectors and/or devices, of which the USB connectors USB#1 to USB#N and the short-distance wireless transceiver ZIGBEE are shown as examples in fig. 4. In the arrangement of fig. 3 for example the first connection cable 304 may come to one of said USB connectors. Also the cables of the keyboard 308 and mouse 309 may come to respective ones of said USB connectors. Using the reference designator 204 for the short-distance wireless transceiver underlines the fact that it can correspond at least partly to the transmitter 204 shown in fig. 2.

The docking station has a video interface portion 412. It is essentially a communications interface between the one or more processors 401 and one or more standardized video connectors, of which the video connectors VIDEO#1 to VIDEO#N are shown as examples in fig. 4. In the arrangement of fig. 3 for example the cable of the display 307 may come to one of said standardized video connectors.

The docking station has an audio interface portion 413. It is essentially a communications interface between the one or more processors 401 and one or more standardized audio connectors, of which the audio connectors AUDIO#1 to AUDIO#N are shown as examples in fig. 4. In the arrangement of fig. 3 for example the cable of the headset 310 may come to one of said standardized audio connectors.

The docking station has a network interface portion 414. It is essentially a communications interface between the one or more processors 401 and one or more standardized network connectors, of which the network connectors NET#1 to NET#N are shown as examples in fig. 4. In the arrangement of fig. 3 for example the second connection cable 305 may come to one of said standardized network connectors.

The docking station may have a particular portion 415 for accommodating its own user interface devices. If such a portion exists, it is essentially a communications interface between the one or more processors 401 and one or more user interface devices of the docking station itself. Examples of these are schematically shown as DEVICE#1 to DEVICE#N in fig. 4. In fig. 3 such user devices may be e.g. the user-operable switches 207 and 208; the docking station may have also e.g. indicator LEDs or other kinds of user interface devices.

The docking station has a power interface portion 416. It constitutes the means for bringing operating power to the various other parts of the docking station, and may also act as local power distribution means, offering operating power to external devices that are connected to the docking station. The (preferably standardized) external power input and output connectors coupled to the power interface portion 416 are schematically shown as POWER#1 to POWER#N in fig. 4.

Comparing fig. 2 to fig. 4, the memory 201 in fig. 2 may constitute a part of the data memory 403. The receiver 202 and discriminator 205 in fig. 2 correspond to the data interface 411 and that of the USB connectors to which the user's portable computer is coupled, as well as data reception functions that may be programmable processes executed by the one or more processors 401. The message composer 203 is most advantageously a programmable process executed by the one or more processors 401, and as already indicated above, the transmitter 204 in fig. 2 corresponds to the short-distance wireless transceiver ZIGBEE in fig. 4. The user interface block 206 in fig. 2 corresponds to the Ul device interface 415 and the appropriate DEVICE blocks in fig. 4. Programmable processes in fig. 2 involve the use of the program memory 402 in fig. 4 in the sense that the program memory 402 contains the actual program code.

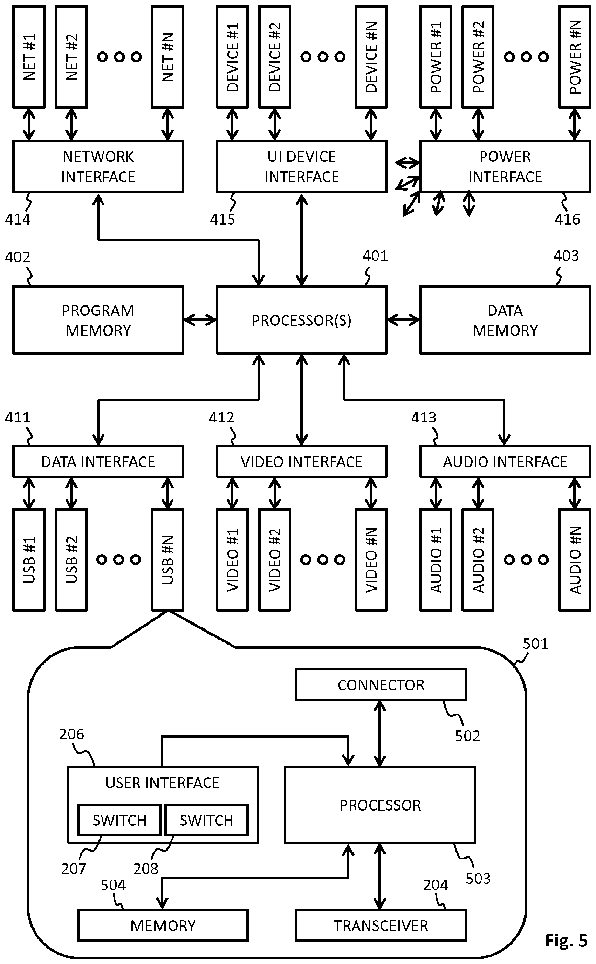

Fig. 5 illustrates an alternative embodiment, in which the apparatus according to the invention is external to the docking station and comprises a connector for connecting to a receptacle in the docking station. In particular, a dongle 501 is connected to one of the USB ports of the docking station. The dongle 501 is a small electronic device of similar size as typical USB memory sticks known at the time of writing this description: for example a couple of centimetres long and about a centimetre across, or a couple of centimetres in each direction. It comprises a connector 502 for connecting to a standardized bus connector (e.g. to an USB port of the docking station), a processor 503, and a memory 504. The transceiver 204 that is used at least to communicate messages towards luminaires of the lighting system according to the principle shown in fig. 2 is also a part of the dongle 501 in the embodiment of fig. 5. The transceiver 204 may be e.g. a Bluetooth transceiver, a BLE (Bluetooth Low Energy) transceiver, a ZigBee transceiver, or some other wireless transceiver. The dongle 501 may comprise a user interface of its own, also according to the principle shown in fig. 2 and likewise illustrated with the reference designator 206, with user-operable switches 207 and 208 shown as examples of practical user interface means. The dongle 501 receives its operating power from the docking station through the connector 502; for example, it is known to use a USB connector to transfer both data and operating power between two devices.

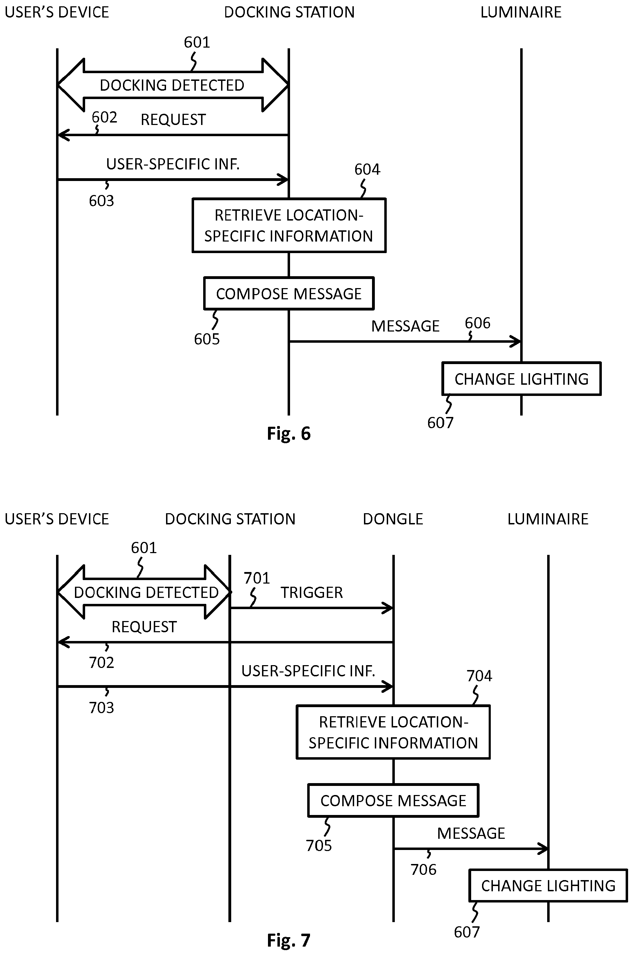

Figs. 6 and 7 illustrate some examples of information flow in embodiments of the invention according to figs. 4 and 5 respectively. When the user couples a portable computer to the docking station of fig. 4, several processes can be automatically invoked both in the portable computer and in the docking station for offering the user the possibility of using the combination features of the portable computer and the location-specific equipment in the most advantageous way. Basic functionalities for making such processes execute automatically are known from the technology of known docking stations. According to an embodiment of the invention one of such processes may involve the reception of a piece of user-specific information from the portable computer to the docking station.

Thus in fig. 6 after detecting the docking at step 601, (one of) the processor(s) of the docking station transmits to the portable computer a request 602 for the user-specific information that tells, what kind of lighting the user would prefer. The requested piece of user-specific information is received from the user's device at step 603. At step 604 (one of) the processor(s) of the docking station retrieves from memory the stored location-specific information that tells, which luminaire(s) should be asked to change their emitted light to reproduce the user's preferred lighting conditions. At step 605 (one of) the processor(s) of the docking station combines the pieces of location-specific and user-specific information into a message containing control information for the luminaire(s) in question. The message is transmitted towards the luminaire(s) in the purpose of controlling it (or them) at step 606, and implemented in the luminaire(s) in question at step 607 to make the lighting at that particular location match the previously stored preferences of the user.

While the exemplary method of fig. 6 assumed the message composing and other processing to take place in the docking station (see fig. 4), the method illustrated in fig. 7 assumes there to be a dedicated dongle connected to the docking station as in fig. 5. The method of fig. 7 differs from that of fig. 6 in a corresponding way. After detecting the docking at step 601, (one of) the processor(s) of the docking station sends a triggering signal 701 to the dongle, which reacts by transmitting to the portable computer a request 702 for the user-specific information that tells, what kind of lighting the user would prefer. The requested piece of user-specific information is received from the user's device at step 703; the docking station acts only as a relaying station in the communications between the dongle and the portable computer. At step 704 the processor of the dongle retrieves from memory the stored location-specific information that tells, which luminaire(s) should be asked to change their emitted light to reproduce the user's preferred lighting conditions. At step 705 the processor of the dongle combines the pieces of location-specific and user-specific information into a message containing control information for the luminaire(s) in question. The message is transmitted towards the luminaire(s) in the purpose of controlling it (or them) at step 706. From the viewpoint of the luminaire it is insignificant from which device the message comes (as long as such device is authorized to control the luminaire in question), so the implementing step in the luminaire(s) in question is marked with the reference designator 607 similarly as in fig. 6.

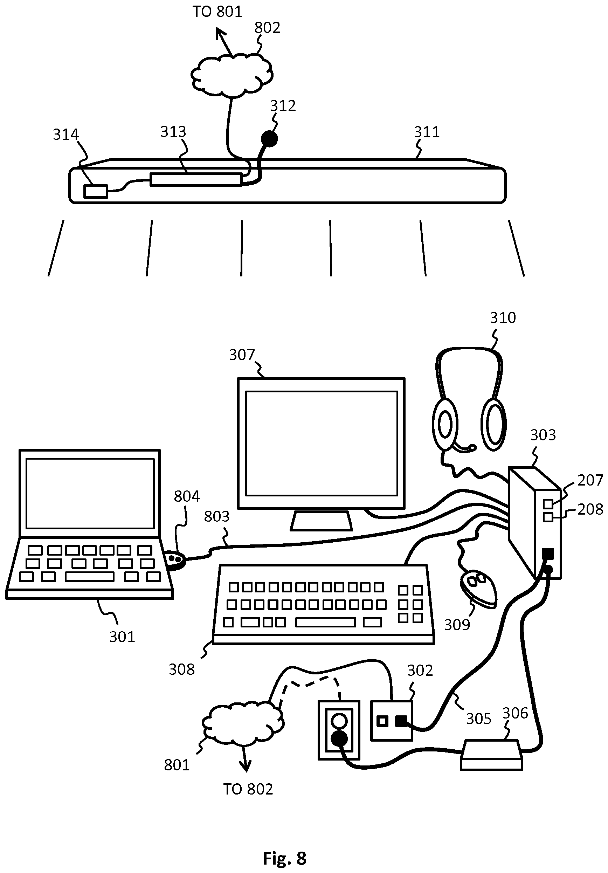

Fig. 8 illustrates some variations to the embodiments discussed so far. First, above it was assumed that the message containing control information was transmitted to the luminaire through a local short-distance wireless channel, such as a Bluetooth or ZigBee connection. In fig. 8 the transmission of the message takes place through one or more networks. The second connection cable 305 connects the docking station 303 to the local connection point 302, from which the connection continues to a network 801 that may comprise various devices such as routers, servers, switches, hubs, and the like. Alternatively or additionally the coupling between the docking station 303 and the network 801 may go through the power lines through which the docking station 303 receives its operating power, particularly if so-called PLC (Power Line Communications) is used. It is also possible that there are no separate lines for operating power but the power may come through the same lines that are used for data communications, for example if so-called PoE (Power over Ethernet) is used.

The luminaire 311 is also coupled to a data network 802, which can be for example a house automation network or a lighting control network. A communications coupling exists between the networks 801 and 802, for example through a gateway computer (not shown in fig. 8). Gateway computers are commonly used to couple house automation networks and lighting control networks to the internet. This communications coupling makes it possible to convey messages from the docking station 303 to the ballast or driver 313 in the luminaire 311.

Another variation in fig. 8 is that although the apparatus according to the invention is again external to the docking station and comprises a connector for connecting to a receptacle in the docking station like in fig. 5, it is not a separate dongle but built as a part of the first connection cable that connects the portable computer 301 to the docking station 303 and that is therefore marked with the reference designator 803 in fig. 8. The processor, memory, transceiver(s), and other parts of the apparatus may be physically located in a dedicated housing along the length of the first connection cable 803, or - as in fig. 8 - they may be located inside one of the connectors at its ends. In fig. 8 they are located in the connector 804 at that end of the first connection cable 803 that is connected to the portable computer 301. Also the pushbuttons or other user interface means of the apparatus, if provided, may be located in the connector 804.

The features of the various embodiments illustrated in figs. 3, 4, 5, and 8 are mutually independent, so that e.g. the way in which the messages is transmitted to the luminaire (wired or wireless) can be selected irrespective of where (docking station, dongle, connecting cable) the apparatus according to the invention is physically located.

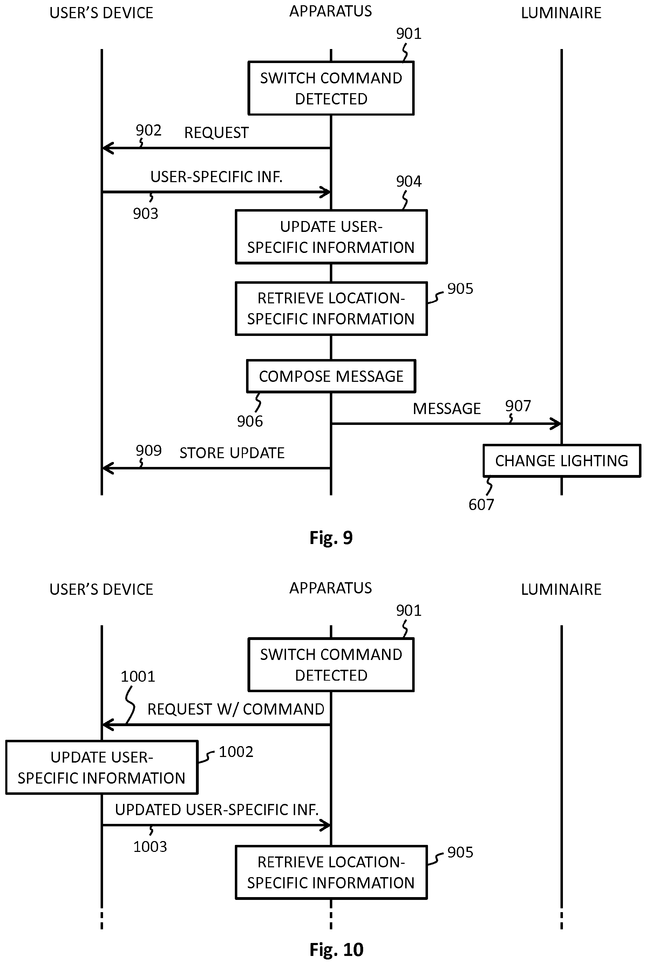

Fig. 9 illustrates an example of method steps to be taken when the user decides to use the user interface of the apparatus according to the invention to change his or her personal lighting preferences. Above it was already noted that the apparatus according to the invention may contain user interface means, for example pushbuttons, that the user may use to give simple and intuitive commands. For example, there may be one pushbutton or rocker switch for dimming or brightening the lighting and another pushbutton or rocker switch to change the colour temperature of the lighting. The user interface may be a capacitive touchpad or touch-sensitive display, in which case it can be used to give versatile commands of many kinds. The user interface may also be a voice recognition interface, through which the user can give spoken commands. The commands may be absolute or relative. Examples of absolute commands are a command to fade the lighting intensity to 50% of the maximum intensity and a command to set the illuminance to 500 lux. Examples of relative commands are a command to decrease the illuminance two steps from its current value and a command to increase the colour temperature of the lighting by 300 degrees from its current value.

In the method of fig. 9 step 901 represents detecting a command that is meant to cause a change in the lighting conditions; for example, the user may have kept a dimming pushbutton included in the user interface of the apparatus pressed for 1.5 seconds, which means a relative command to dim the lighting by as much as its characteristic dimming curve descends during said time interval. At step 902 the apparatus according to the invention requests from the user-specific device the user-specific information that tells, what kind of lighting the user preferred before the most recent command. Step 903 represents receiving said user-specific information. As such, steps 902 and 903 may be similar to the corresponding steps 602 and 603 in fig. 6 or steps 702 and 703 in fig. 7; they can also be omitted if the apparatus according to the invention has previously received the most recent user-specific information and has it still stored in its memory.

Step 904 represents updating the user-specific information in accordance with the most recently received command from the user. The apparatus according to the invention evaluates the command received at step 901 in light of the previously stored user-specific information and obtains the result that describes, what changes should be made to local lighting conditions to most appropriately execute the most recently received command. Taken the example mentioned above (a dimming command 1.5 seconds long), and assuming that previously the user had preferred a lighting level 80% of maximum and the characteristic dimming curve is a straight line descending 10 percentage units per second, the obtained result of step 904 is that the user would now prefer a lighting level 65% of maximum.

At step 905 (one of) the processor(s) of the apparatus according to the invention retrieves from memory the stored location-specific information that tells, which luminaire(s) should be asked to change their emitted light to reproduce the user's new preferred lighting conditions. At step 906 (one of) the processor(s) of the apparatus combines the pieces of location-specific and updated user-specific information into a message containing control information for the luminaire(s) in question. The message is transmitted towards the luminaire(s) in the purpose of controlling it (or them) at step 907. From the viewpoint of the luminaire it is insignificant at which time the message comes (as long as the transmitting device is authorized to control the luminaire in question), so the implementing step in the luminaire(s) in question is marked with the reference designator 607 similarly as in fig. 6. At step 909 the apparatus according to the invention transmits the updated user-specific information to the user-specific device for storing, so that next time when this user-specific device receives a request it can respond with the most recent version of the user-specific information. Step 909 could be performed at any time after obtaining the updated user-specific information as a result of step 904.

Updating the user-specific information as a response to the most recently received command could also be on the responsibility of the user-specific device. Fig. 10 illustrates steps of a method of this kind. A command is detected at the user interface of the apparatus according to the present invention at step 901 similarly as in fig. 9. However, now the request message 1001 transmitted to the user-specific device contains information indicative of the contents of the command received at step 901. The user-specific device updates its stored user-specific information at step 1002 in accordance with the most recently received command from the user and responds with updated user-specific information at step 1003. After that the method of fig. 10 comprises the retrieval of location-specific information from memory in the apparatus according to the invention as in step 905, and continues like in fig. 9, with the additional change that the updating message 909 of fig. 9 is not needed any more, because the user-specific device already has stored the updated user-specific information at step 1002.

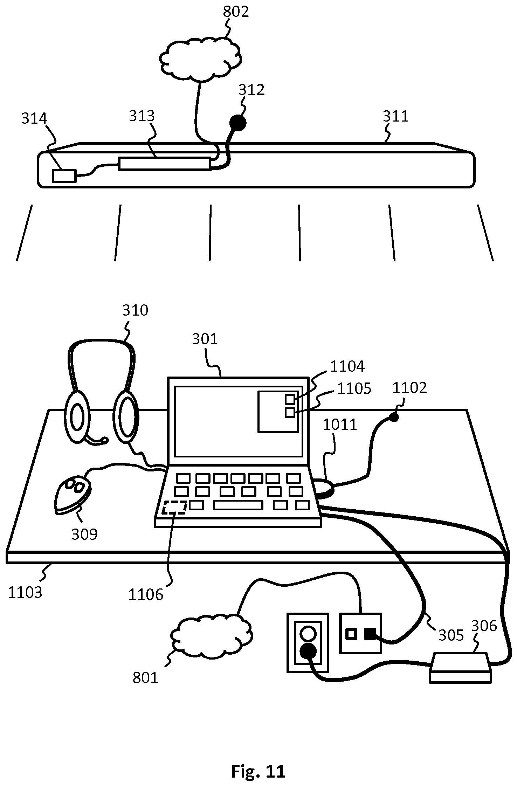

Fig. 11 illustrates an embodiment of the invention in which the piece of location-specific equipment is a dongle 1101 that preferably contains a fixing system 1102 for keeping it permanently or semi-permanently fixed at or close to a particular location within an area that is served by the lighting system. For example a string may attach the dongle 1101 to a table 1103. In this case the portable computer 301, its network connection cable 305, power supply 306, and user interface devices such as a mouse 309 and headset 310 all belong to the category of user-specific devices. In fig. 11 it is also assumed, for the sake of example, that although the portable computer has wired access to a data network 801 and the driver or ballast 313 of the luminaire 311 has access to a lighting control network 802, there are no gateways between the two networks so that messages to the luminaire 311 are transmitted through a local short-distance wireless channel such as a Bluetooth or ZigBee connection or the like.

The display and mouse 309 of the portable computer 301 are utilized as parts of the user interface of the apparatus according to the invention in the embodiment of fig. 11. Namely, a window pops up on the display, containing user interface means such as clickable buttons 1104 and 1105. Also a short-distance wireless transmitter 1106 such as a Bluetooth or ZigBee transmitter of the portable computer 301 is used to execute the method according to an embodiment of the invention: it transmits the composed messages to the receiver 314 or the ballast or driver 313 of the luminaire 311. In order to utilize parts of the portable computer or other user-specific device for the purposes of the present invention it needs to be programmed accordingly. The portable computer 301 may have the necessary software stored in its program memory as a result of a previous program installation step, or the software may be loaded to the portable computer 301 from the dongle 1101 or from the network 801 after the dongle has been connected to the portable computer.

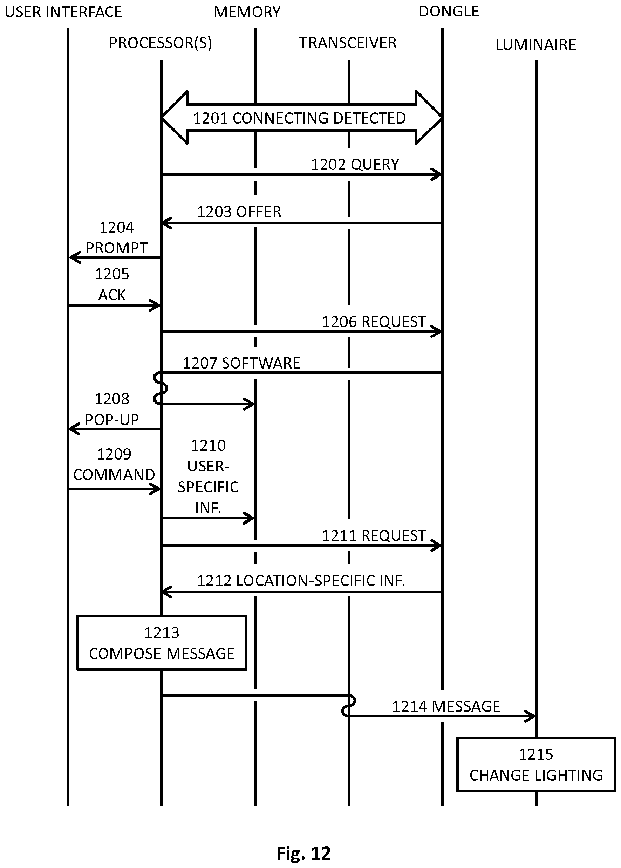

Fig. 12 illustrates an example of a method according to an embodiment of the invention that can be executed with the hardware shown in fig. 11. Step 1201 corresponds to the portable computer detecting that a dongle has been connected. At step 1202 the portable computer sends a query to the dongle, which responds at step 1203 with an offer to upload the software for executing the method. At step 1204 the portable computer displays a prompt to the user, asking him or her to accept the uploading of the software. The user acknowledges the uploading at step 1205, after which the portable computer uses a request message 1206 to access the software that is stored in the dongle. The software is read from the dongle and stored in a memory of the portable computer at step 1207. Executing an appropriate part of the software causes the portable computer to display a pop-up window or the like at step 1208, offering the user the possibility to give commands for changing the local lighting according to his or her preferences - here it is assumed that this was the first time when the user was given such a possibility, so that no user-specific information in the sense of personal lighting preferences had been previously stored in the portable computer, which acts as the user-specific device.

At step 1209 the user taps a touch-sensitive display, clicks on a displayed pushbutton, enters a numeric value in the appropriate field, or otherwise expresses his or her preferences about the lighting. The portable computer evaluates the user input and stores the obtained result as the user-specific information that indicates currently preferred lighting conditions at step 1210. Fig. 12 illustrates requesting the location-specific information from the dongle at step 1211 and providing the requested location-specific information as a response at step 1212, although the location-specific information may have been provided and stored in the memory of the portable computer already earlier, for example at step 1207 together with storing the other pieces of software.

At step 1213 a message composer that is part of the uploaded software causes a processor of the portable computer to combine the pieces of location-specific and user-specific information into a message containing control information for at least one of the luminaires that provide the local lighting. At step 1214 the message is transmitted through a short-distance wireless transmitter of the portable computer in the purpose of controlling said at least one of said luminaires. Changing the lighting at the luminaire is illustrated as step 1215 in fig. 12.

If the user-specific information had already been stored at the portable computer, it can be assumed that also the necessary software had been stored earlier. In that case the method could proceed from the connection detecting step 1201 directly to displaying the pop-up window at step 1208. Simultaneously the execution of the software could make the portable computer perform steps 1211, 1212, 1213, and 1214 without waiting for user input, so that the first message to the luminaire would reflect that piece of user-specific information that was most recently stored. In other words, in such a case the personalized lighting would be implemented completely automatically, without requiring the user to do anything except connecting the dongle, unless he or she wants to change the settings from what was stored as his or her personal preferences the last time.

The location-specific information that enables correctly recognizing the location-specific lighting means that serve that particular location may be established and maintained in various ways. If explicit commissioning of the lighting system is accepted, the piece of location-specific information may be stored as a response to an explicit configuration command from a control device, said configuration command containing identification information of one or more luminaires serving that particular location. As an example, a commissioning specialist may visit each location in turn and use a control device to instruct each piece of location-specific equipment to store one or more unambiguous identifiers of the appropriate luminaire(s). When messages are transmitted later in the purpose of controlling said luminaire(s), said one or more unambiguous identifiers are included in said messages. Explicit commissioning involves the advantage that correct operation is achieved with relative certainty, because the commissioning specialist may perform a check, using his or her user-specific device to test the operation at each location. However, it requires personnel and time, and some re-commissioning is needed every time when changes are made in the mutual relations of the location-specific equipment and the luminaires.

Establishing and maintaining the location-specific information automatically is possible at least if the luminaires that are to be controlled are capable of transmitting wireless signals that include their identifier, and if the location-specific equipment comprises sufficient means for receiving such wireless signals and measuring their strength. Wireless signals sent by one or more luminaires can be evaluated for the duration of configuration period, and the wireless signals of that or those luminaires can be identified from which the wireless signals are received at highest strength. The piece of location-specific information can then constitute the identifiers of that or those luminaires. While this kind of automatic commissioning could superficially suffer from similar susceptibility to erroneous recognition as the prior art methods where the smartphone or other user-specific device receives the wireless signals of luminaires, it nevertheless involves the advantage that the location-specific equipment at different locations are typically very much alike, and placed in a similar way. For example, if the location-specific equipment involves a docking station, it can be expected that at each desk the docking station is located on the table, in the field of view of the user, and easily accessible from the chair in front of the table. Also the location-specific lighting means are typically located at a constant physical relation with the table, like directly above it. Thus the reception conditions at each location are very similar, which decreases the possibility of accidentally recognizing the wireless transmissions of incorrect luminaires.

Also the location-specific equipment may be programmed to perform the process of evaluating wireless signals sent by one or more luminaires at predetermined intervals, or every time after a change has been detected in the relative strengths of wireless signals received from luminaires. For example, the location-specific equipment may use a significant duration of time each night to evaluate wireless signals sent by the luminaires. The long duration of time that is available during the night increases the certainty of identifying just the closest luminaire(s), and also during the night there are typically fewer interfering factors like other wireless devices that move around with the users, which further enhances the possibility of making the correct identification.

Previously it was already indicated that the location-specific information may include information about the particular properties of that location with respect to sunlight or other externally provided lighting. Such information may be there as a result of explicit commissioning, or it may accumulate in the location-specific equipment gradually as a result of using sensors. When it comes to utilizing such information at the time of composing the message to the luminaire(s), the location-specific equipment may take it into account in various ways. For example if the user-specific information announces the user preferring lighting of the colour of natural sunlight, and the location-specific information (together with actual time information from a clock circuit and actual weather information from a weather information service) indicates that this location should have ample natural sunlight currently available, the message to the luminaire could be even a dummy message telling the luminaire to do nothing (or to produce very little additional light) because the currently available natural sunlight actually is what the user prefers.

The location-specific information may also include information about the overall colour of light that is currently emitted by a display that constitutes a part of the location-specific equipment. Again as an example, if the user-specific information indicates the user preferring blueish light, and the location-specific equipment notices that the colours currently visible on the display are mainly various tones of blue, the message to the luminaire(s) may not need to tune the overall lighting as heavily towards blue as would be needed if there were mainly some other colours on the display at the moment.

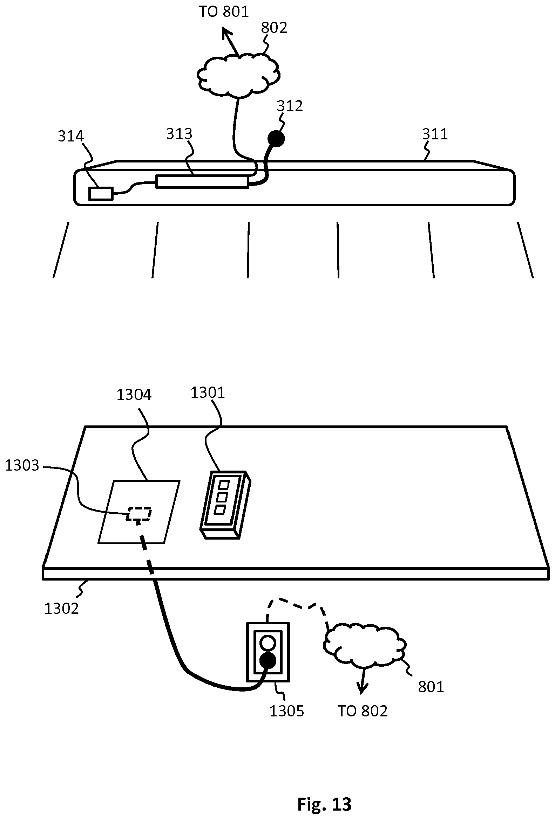

Fig. 13 illustrates schematically an alternative embodiment of the invention. In this embodiment the user-specific device is a portable electronic device such as a smartphone 1301 or other kind of portable or wearable device for personal communications. The location-specific equipment comprises a piece of furniture, such as a table 1302, and a memory 1303 embedded within its structure. The memory 1303 is configured to store the piece of location-specific information, the purpose of which is to enable correctly recognizing the luminaire 311 or other location-specific lighting means that serve that particular location. The memory 1303 is readable in a contactless fashion from a short distance; for example, a "hotspot" area 1304 may have been marked on the surface of the table 1302 so that a suitably equipped smartphone or other electronic device that is placed within the "hotspot" area 1304 is capable of reading the stored piece of location-specific information from the memory 1303.

The "hotspot" area 1304 may simultaneously be a wireless charging spot, equipped with an inductive loop or other kind of means for wirelessly transferring electric energy to a rechargeable battery of a suitably equipped electronic device when such a device is placed within the "hotspot" area 1304. For this purpose there may be a connection to a power outlet 1305, from which there may further be a data connection (PLC or other) to a network 801. A control connection may exist between the driver or ballast 313 of the luminaire 311 and a lighting control network 802, and there may be a gateway (not shown) that forms a communications connection between the networks 801 and 802.

The smartphone 1301 may comprise a stored executable application for controlling the lighting. The application may comprise a first functionality that can be used without access to the location-specific information, and a second functionality that can be used when the location-specific information is available. The first functionality may operate according to a number of different principles. For example, the first functionality may evaluate the strength of wireless signals received from a number of luminaires, select the one with highest strength, and send control commands to that luminaire according to the assumption that it is the one currently closest to the smartphone. Alternatively the first functionality may require the user to direct the smartphone in a particular way, for example so that the primary emission direction of a flash LED in the smartphone is towards the luminaire that is to be controlled. According to yet another alternative the first functionality may require the user to first register the luminaire to be controlled, for example by bringing the smartphone relatively close to the luminaire in question, after which the control commands are sent to that luminaire unless the user registers another luminaire or otherwise expresses a wish to cancel the most recent registration. Yet another alternative is that the first functionality only offers more general possibilities of controlling the lighting, for example so that commands to change the lighting level are executed by all luminaires that are close enough to the smartphone to receive them. The present invention does not place any restrictions to how the first functionality operates.

The second functionality may operate according to the principle of the present invention, so that it receives from the user a piece of user-specific information concerning illumination according to personal preferences of the user, and reads the stored piece of location-specific information from the memory 1303 embedded in the location-specific equipment. Then the second functionality combines said pieces of location-specific and user-specific information into a message containing control information for that luminaire or those luminaires, the identification of which was enabled by the location-specific information. The smartphone may transmit said message to the luminaire(s) in question in the purpose of controlling at least one of said luminaires. The step of receiving the user-specific information may in this case be performed already before establishing the connection between the location-specific equipment and the user-specific device that becomes the originator of the user-specific information in the combining step. Alternatively the second functionality may recognize that the location-specific information is now available and prompt the user, who previously had only some more general commands available for controlling the lighting, to enter his or her preferences for personalized lighting conditions at that particular location.

The second functionality may utilise a direct communications connection, such as a Bluetooth, ZigBee, or other short-distance wireless connection, to send the message to the identified luminaire. Alternatively if the connection through the power outlet 1305, data network 801, and lighting control network 802 is available, the second functionality may utilise it for sending the message, so that it remains on the responsibility of the network(s) to route the message to the appropriate luminaire according to address information that the second functionality included in the message.

The embodiments of the invention that have been described above are not limiting by nature, and various alternative embodiments of the invention may be presented. For example, the user-specific device may be a wearable device, such as an activity tracker that is worn around the wrist, and the location-specific equipment may comprise a keyboard, so that a local connection can be established between the location-specific equipment and the user-specific device when the user places his or her hands on the keyboard and consequently the activity tracker comes close enough to an NFC (near-field communications) transceiver embedded in the front edge of the keyboard. Although wireless and wired communications have been described as alternatives to each other, they may also be used in concert, for example so that once a confirmation about the presence of a particular user-specific device has been conveyed to the location-specific luminaire through a wired connection, further control commands from that user-specific device to that luminaire may come in wireless form.

## Claims

1. An apparatus for generating control information for controlling one or more luminaires (311) of a lighting system, the apparatus comprising:
- a memory (201) configured to store a piece of location-specific information (103) for correctly recognizing location-specific lighting means of said lighting system that serve a particular location,
**characterized in that**:
- the apparatus is either a docking station (303) for coupling a portable computer to a local connection point of a computer network or external to such a docking station, in which latter case the apparatus comprises a connector (502) for connecting to a receptacle in said docking station (303),
- the apparatus comprises a receiver (202) configured to receive from the portable computer a piece of user-specific information (105) for correctly recognizing personal lighting preferences of a user,
- the apparatus comprises a message composer (203) configured to combine said pieces of location-specific (103) and user-specific information (105) into a message containing control information for said location-specific lighting means,
- the apparatus comprises a transmitter (204) configured to transmit said message for the purpose of controlling said location-specific lighting means,
- said apparatus is a piece of location-specific equipment for permanent or semi-permanent use at a particular location within an area that is served by said lighting system and that contains a number of specific locations that are to be illuminated according to personal preferences of users, and
- said receiver (202) comprises a discriminator (205) configured to allow receiving said piece of user-specific information (105) when a local connection is established between said apparatus and the portable computer.

2. An apparatus according to claim 1, wherein said apparatus comprises a connection cable (803) for connecting the portable computer (301) to said docking station (303).

3. An apparatus according to claim 1 or 2, wherein:
- the apparatus comprises one or more user-operable switches (207, 208) for receiving switch commands, and
- the message composer (203) is configured to combine at least one received switch command and said piece of location-specific information (103) into a message containing control information for said location-specific lighting means.

4. A method for generating control information for controlling one or more luminaires of a lighting system, the method comprising:
- storing a piece of location-specific information (103) for correctly recognizing location-specific lighting means of said lighting system that serve a particular location,
**characterized in that**:
- the method comprises receiving, at a docking system for coupling a portable computer to a local connection point of a computer network, a piece of user-specific information (105) from a portable computer coupled thereto for correctly recognizing personal lighting preferences of a user,
- the method comprises combining said pieces of location-specific (103) and user-specific information (105) into a message containing control information for said location-specific lighting means,
- the method comprises transmitting said message for the purpose of controlling said location-specific lighting means,
- said location-specific information is stored in a piece of location-specific equipment that is used permanently or semi-permanently at a particular location within an area that is served by said lighting system and contains a number of specific locations that are to be illuminated according to personal preferences of users, and
- said step of receiving a piece of user-specific information (105) is performed when a local connection is established between said piece of location-specific equipment and the portable computer (104) that is the originator of said user-specific information.

5. A method according to claim 4, comprising:
- receiving a new piece of user-specific information (105) that contains at least partly different user-specific information than previously, indicating that the user has made some change in his or her lighting preferences,
- combining said new piece of user-specific information (105) with said piece of location-specific information (103) into a new message containing control information for said location-specific lighting means and transmitting said new message for the purpose of controlling said location-specific lighting means, and
- storing said new piece of user-specific information as updated user-specific information (105) in said portable computer (104).

6. A method according to claim 5, wherein said new piece of user-specific information (105) is obtained as a result of evaluating - in light of the previously stored user-specific information - a command received through a user interface, said result describing, what changes should be made to local lighting conditions to most appropriately execute said command.

7. A method according to any of claims 4 to 6, comprising:
- storing said piece of location-specific information (103) as a response to an explicit configuration command from a control device, said configuration command containing identification information of one or more luminaires serving that particular location.

8. A method according to any of claims 4 to 6, comprising:
- storing said piece of location-specific information (103) as a result of evaluating wireless signals sent by one or more luminaires for the duration of a configuration period and identifying the wireless signals of that or those of said one or more luminaires from which the wireless signals are received at highest strength.

9. A method according to claim 8, wherein a process of evaluating wireless signals sent by one or more luminaires for the duration of a configuration period and identifying the wireless signals of that or those of said one or more luminaires from which the wireless signals are received at highest strength is performed
- at predetermined intervals, or
- after a change has been detected in the relative strengths of wireless signals received from luminaires.

10. A computer program comprising machine-readable instructions that, when executed by a system comprising one or more processors, memory, a receiver, and a transmitter, are configured to cause the implementation of a method according to any of claims 4 to 9.

## Patentansprüche

1. Gerät zum Erzeugen von Steuerungsinformationen zum Steuern von einer oder mehreren Leuchten (311) eines Beleuchtungssystems, wobei das Gerät umfasst:
- einen Speicher (201), der dazu konfiguriert ist, ein Stück von ortsspezifischen Informationen (103) zu speichern zum korrekten Erkennen von ortsspezifischen Beleuchtungsmitteln des Beleuchtungssystems, die einen bestimmten Ort versorgen,
**dadurch gekennzeichnet, dass:**
- das Gerät entweder eine Docking-Station (303) zum Koppeln eines portablen Computers an einen örtlichen Verbindungspunkt eines Computernetzwerks ist, oder extern zu einer solchen Docking-Station ist, wobei in letzterem Fall das Gerät einen Verbinder (502) zum Verbinden an einen Stecker in der Docking-Station (303) umfasst,
- das Gerät einen Empfänger (202) umfasst, der dazu konfiguriert ist, von dem portablen Computer ein Stück von benutzerspezifischen Informationen (105) zu empfangen zum korrekten Erkennen von persönlichen Beleuchtungspräferenzen eines Benutzers,
- das Gerät einen Nachrichtenersteller (203) umfasst, der dazu konfiguriert ist, die Stücke von ortsspezifischen (103) und benutzerspezifischen Informationen (105) zu einer Nachricht zu kombinieren, die Steuerungsinformationen für die ortsspezifischen Beleuchtungsmittel enthält,
- das Gerät ein Übertragungsmittel (204) umfasst, das dazu konfiguriert ist, die Nachricht zu übertragen zum Zwecke des Steuerns der ortsspezifischen Beleuchtungsmittel,
- das Gerät ein Stück von einer ortsspezifischen Ausrüstung für eine permanente oder semipermanente Verwendung an einem bestimmten Ort innerhalb eines Gebiets ist, das durch das Beleuchtungssystem versorgt wird, und das eine Anzahl von spezifischen Orten enthält, die gemäß persönlichen Präferenzen von Benutzern beleuchtet werden sollen, und
- der Empfänger (202) einen Diskriminator (205) umfasst, der dazu konfiguriert ist, ein Empfangen des Stücks von benutzerspezifischen Informationen (105) zu erlauben, wenn eine örtliche Verbindung zwischen dem Gerät und dem portablen Computer hergestellt ist.

2. Gerät nach Anspruch 1, wobei das Gerät ein Verbindungskabel (803) zum Verbinden des portablen Computers (301) mit der Docking-Station (303) umfasst.

3. Gerät nach Anspruch 1 oder 2, wobei:
- das Gerät einen oder mehrere benutzerbedienbare Schalter (207, 208) zum Empfangen von Schaltbefehlen umfasst, und
- der Nachrichtenersteller (203) dazu konfiguriert ist, zumindest einen empfangenen Schaltbefehl und das Stück von ortsspezifischen Informationen (103) zu einer Nachricht zu kombinieren, die Steuerungsinformationen für die ortsspezifischen Beleuchtungsmittel enthält.

4. Verfahren zum Erzeugen von Steuerungsinformationen zum Steuern von einer oder mehreren Leuchten eines Beleuchtungssystems, wobei das Verfahren umfasst:
- Speichern eines Stücks von ortsspezifischen Informationen (103) zum korrekten Erkennen von ortsspezifischen Beleuchtungsmitteln des Beleuchtungssystems, die einen bestimmten Ort versorgen,
**dadurch gekennzeichnet, dass:**
- das Verfahren ein Empfangen umfasst, an einem Docking-System zum Koppeln eines portablen Computers an einen örtlichen Verbindungspunkt eines Computernetzwerks, eines Stücks von benutzerspezifischen Informationen (105) von einem portablen Computer, der daran gekoppelt ist, zum korrekten Erkennen von persönlichen Beleuchtungspräferenzen eines Benutzers,
- das Verfahren ein Kombinieren der Stücke von ortsspezifischen (103) und benutzerspezifischen Informationen (105) zu einer Nachricht umfasst, die Steuerungsinformationen für die ortsspezifischen Beleuchtungsmittel umfasst,
- das Verfahren ein Übertragen der Nachricht zum Zwecke eines Steuerns der ortsspezifischen Beleuchtungsmittel umfasst,
- die ortsspezifischen Informationen in einem Stück von einer ortsspezifischen Ausrüstung gespeichert sind, die permanent oder semipermanent an einem bestimmten Ort innerhalb eines Gebiets verwendet wird, das durch das Beleuchtungssystem versorgt wird, und das eine Anzahl von spezifischen Orten enthält, die gemäß persönlichen Präferenzen von Benutzern beleuchtet werden sollen, und
- der Schritt des Empfangens eines Stücks von benutzerspezifischen Informationen (105) durchgeführt wird, wenn eine örtliche Verbindung zwischen dem Stück der ortsspezifischen Ausrüstung und dem portablen Computer (104) hergestellt wird, der der Urheber der benutzerspezifischen Informationen ist.

5. Verfahren nach Anspruch 4, umfassend:
- Empfangen eines neuen Stücks von benutzerspezifischen Informationen (105), die zumindest teilweise unterschiedliche benutzerspezifische Informationen als zuvor enthalten, die anzeigen, dass der Benutzer Veränderungen in seinen oder ihren Beleuchtungspräferenzen vorgenommen hat,
- Kombinieren des neuen Stücks von benutzerspezifischen Informationen (105) mit dem Stück von ortsspezifischen Informationen (103) zu einer neuen Nachricht, die Steuerungsinformationen für die ortsspezifischen Beleuchtungsmittel enthält, und Übertragen der neuen Nachricht zum Zwecke des Steuerns der ortsspezifischen Beleuchtungsmittel, und
- Speichern des neuen Stücks von benutzerspezifischen Informationen als aktualisierte benutzerspezifische Informationen (105) in dem portablen Computer (104).

6. Verfahren nach Anspruch 5, wobei das neue Stück von benutzerspezifischen Informationen (105) als ein Resultat eines Evaluierens - im Hinblick auf die zuvor gespeicherten benutzerspezifischen Informationen - eines Befehls erhalten wird, der durch eine Benutzerschnittstelle empfangen wird, wobei das Resultat beschreibt, welche Veränderungen an den örtlichen Beleuchtungsbedingungen gemacht werden sollten, um den Befehl möglichst angemessen auszuführen.

7. Verfahren nach einem der Ansprüche 4 bis 6, umfassend:
- Speichern des Stücks von ortsspezifischen Informationen (103) als eine Antwort auf einen expliziten Konfigurationsbefehl von einer Steuerungsvorrichtung, wobei der Konfigurationsbefehl Identifikationsinformationen von einer oder mehreren Leuchten enthält, die diesen bestimmten Ort versorgen.

8. Verfahren nach einem der Ansprüche 4 bis 6, umfassend:
- Speichern des Stücks von ortsspezifischen Informationen (103) als ein Resultat eines Evaluierens von drahtlosen Signalen, die durch eine oder mehreren Leuchten für die Dauer einer Konfigurationsperiode gesendet werden, und Identifizieren der drahtlosen Signale von der oder von denjenigen von der einen oder den mehreren Leuchten, von denen die drahtlosen Signale bei einer höchsten Stärke empfangen werden.

9. Verfahren nach Anspruch 8, wobei ein Prozess eines Evaluierens von drahtlosen Signalen, die durch eine oder mehrere Leuchten für die Dauer einer Konfigurationsperiode gesendet werden, und eines Identifizierens der drahtlosen Signale von der oder von denjenigen von der einen oder den mehreren Leuchten, von denen die drahtlosen Signale bei einer höchsten Stärke empfangen werden, durchgeführt wird,
- in vorbestimmten Intervallen, oder
- nachdem eine Veränderung in den relativen Stärken von drahtlosen Signalen detektiert wurde, die von Leuchten empfangen werden.

10. Computerprogramm, umfassend maschinenlesbare Instruktionen, die, wenn sie durch ein System ausgeführt werden, das ein oder mehrere Prozessoren, einen Speicher, einen Empfänger, und ein Übertragungsmittel umfasst, dazu konfiguriert sind, die Implementierung eines Verfahrens nach einem der Ansprüche 4 bis 9 zu verursachen.

## Revendications

1. Appareil pour générer des informations de commande pour commander un ou plusieurs luminaire(s) (311) d'un système d'éclairage, l'appareil comprenant :
- une mémoire (201) configurée pour stocker un élément d'information spécifique à l'emplacement (103) pour reconnaître correctement des moyens d'éclairage spécifiques à l'emplacement dudit système d'éclairage qui desservent un emplacement particulier,
**caractérisé en ce que** :
- l'appareil est soit une station d'accueil (303) pour coupler un ordinateur portable à un point de connexion local d'un réseau informatique ou externe à une telle station d'accueil, dans ce dernier cas l'appareil comprend un connecteur (502) pour se connecter à un réceptacle dans ladite station d'accueil (303),
- l'appareil comprend un récepteur (202) configuré pour recevoir de l'ordinateur portable un élément d'information spécifique à l'utilisateur (105) pour reconnaître correctement les préférences d'éclairage personnelles d'un utilisateur,
- l'appareil comprend un dispositif de composition de message (203) configuré pour combiner lesdits éléments d'information spécifique à l'emplacement (103) et spécifique à l'utilisateur (105) en un message contenant des informations de commande pour lesdits moyens d'éclairage spécifiques à l'emplacement,
- l'appareil comprend un émetteur (204) configuré pour transmettre ledit message dans le but de commander lesdits moyens d'éclairage spécifiques à l'emplacement,
- ledit appareil est un élément d'équipement spécifique à l'emplacement pour une utilisation permanente ou semi-permanente à un emplacement particulier à l'intérieur d'une zone qui est desservie par ledit système d'éclairage et qui contient un certain nombre d'emplacements spécifiques qui doivent être éclairés en fonction des préférences personnelles des utilisateurs, et
- ledit récepteur (202) comprend un discriminateur (205) configuré pour permettre la réception dudit élément d'information spécifique à l'utilisateur (105) lorsqu'une connexion locale est établie entre ledit appareil et l'ordinateur portable.

2. Appareil selon la revendication 1, dans lequel ledit appareil comprend un câble de connexion (803) pour connecter l'ordinateur portable (301) à ladite station d'accueil (303).

3. Appareil selon la revendication 1 ou 2, dans lequel :
- l'appareil comprend un ou plusieurs commutateur(s) actionnable(s) par l'utilisateur (207, 208) pour recevoir des instructions de commutation, et
- le dispositif de composition de message (203) est configuré pour combiner au moins une instruction de commutation reçue et ledit élément d'information spécifique à l'emplacement (103) en un message contenant des informations de commande pour lesdits moyens d'éclairage spécifiques à l'emplacement.

4. Procédé pour générer des informations de commande pour commander un ou plusieurs luminaire(s) d'un système d'éclairage, le procédé comprenant :
- le stockage d'un élément d'information spécifique à l'emplacement (103) pour reconnaître correctement des moyens d'éclairage spécifiques à l'emplacement dudit système d'éclairage qui desservent un emplacement particulier,
**caractérisé en ce que** :
- le procédé comprend la réception, au niveau d'un système d'accueil pour coupler un ordinateur portable à un point de connexion local d'un réseau informatique, d'un élément d'information spécifique à l'utilisateur (105) d'un ordinateur portable couplé à celui-ci pour reconnaître correctement les préférences d'éclairage personnelles d'un utilisateur,
- le procédé comprend la combinaison desdits éléments d'information spécifique à l'emplacement (103) et spécifique à l'utilisateur (105) en un message contenant des informations de commande pour lesdits moyens d'éclairage spécifiques à l'emplacement,
- le procédé comprend la transmission dudit message dans le but de commander lesdits moyens d'éclairage spécifiques à l'emplacement,
- lesdites informations spécifiques à l'emplacement sont stockées dans un élément d'équipement spécifique à l'emplacement qui est utilisé de façon permanente ou semi-permanente à un emplacement particulier dans une zone qui est desservie par ledit système d'éclairage et contient un certain nombre d'emplacements spécifiques qui doivent être éclairés en fonction des préférences personnelles des utilisateurs, et
- ladite étape de réception d'un élément d'information spécifique à l'utilisateur (105) est effectuée lorsqu'une connexion locale est établie entre ledit élément d'équipement spécifique à l'emplacement et l'ordinateur portable (104) qui est l'expéditeur desdites informations spécifiques à l'utilisateur.

5. Procédé selon la revendication 4, comprenant :
- la réception d'un nouvel élément d'information spécifique à l'utilisateur (105) qui contient des informations spécifiques à l'utilisateur au moins partiellement différentes des informations précédentes, indiquant que l'utilisateur a modifié ses préférences d'éclairage,
- la combinaison dudit nouvel élément d'information spécifique à l'utilisateur (105) avec ledit élément d'information spécifique à l'emplacement (103) en un nouveau message contenant des informations de commande pour lesdits moyens d'éclairage spécifiques à l'emplacement et la transmission dudit nouveau message dans le but de commander lesdits moyens d'éclairage spécifiques à l'emplacement, et
- le stockage dudit nouvel élément d'information spécifique à l'utilisateur en tant qu'informations spécifiques à l'utilisateur mises à jour (105) dans ledit ordinateur portable (104).

6. Procédé selon la revendication 5, dans lequel ledit nouvel élément d'information spécifique à l'utilisateur (105) est obtenu suite à l'évaluation - à la lumière des informations spécifiques à l'utilisateur précédemment stockées - d'une instruction reçue à travers une interface utilisateur, ledit résultat décrivant, quels changements doivent être apportés aux conditions d'éclairage local pour exécuter ladite instruction de la manière la plus appropriée.

7. Procédé selon l'une des revendications 4 à 6, comprenant :
- le stockage dudit élément d'information spécifique à l'emplacement (103) en réponse à une instruction de configuration explicite provenant d'un dispositif de commande, ladite instruction de configuration contenant des informations d'identification d'un ou de plusieurs luminaire(s) desservant cet emplacement particulier.

8. Procédé selon l'une des revendications 4 à 6, comprenant :
- le stockage dudit élément d'information spécifique à l'emplacement (103) suite à l'évaluation de signaux sans fil envoyés par un ou plusieurs luminaire(s) pendant la durée d'une période de configuration et l'identification des signaux sans fil de celui ou ceux desdits un ou plusieurs luminaire(s) duquel/desquels les signaux sans fil sont reçus à la plus haute intensité.

9. Procédé selon la revendication 8, dans lequel un processus d'évaluation de signaux sans fil envoyés par un ou plusieurs luminaire(s) pendant la durée d'une période de configuration et d'identification des signaux sans fil de celui ou ceux desdits un ou plusieurs luminaire(s) duquel/desquels les signaux sans fil sont reçus à la plus haute intensité est effectué
- à des intervalles prédéterminés, ou
- après détection d'un changement des intensités relatives des signaux sans fil reçus des luminaires.

10. Programme informatique comprenant des instructions lisibles par machine qui, lorsqu'elles sont exécutées par un système comprenant un ou plusieurs processeur(s), une mémoire, un récepteur, et un émetteur, sont configurées pour provoquer la mise en oeuvre d'un procédé selon l'une des revendications 4 à 9.
